# EUROPEAN PATENT APPLICATION

(11) **EP 4 741 901 A1**
(43) Date of publication of application: **13.05.2026**
(21) Application number: 25213610.6
(22) Date of filing: 05.11.2025
(51) Int. Cl.: G02B 6/44

(54) **TRAY AND FIBER-OPTIC APPARATUS**

(30) Priority: 07.11.2024 US 202463717653 P
(71) Applicant: Corning Research & Development Corporation, Corning, New York 14831 (US)
(72) Inventor: FABRYKOWSKI, Grzegorz, 91348 Lodz (PL); OZAREK, Dawid Dariusz, 97-300 Lodzkie (PL); TOSIK, Grzegorz, 98-113 Buczek (PL)
(74) Representative: Reddie & Grose LLP

(57) **Abstract**

A tray for use in a fiber-optic apparatus is provided. The tray has a first surface comprising a plurality of regions. Each of the plurality of regions comprises at least one fiber-optic component or mount for retaining a fiber-optic component. Each of the plurality of regions are physically separated from the others of the plurality of regions by one or more dividing barriers. A fiber-optic apparatus comprising the tray for use in a fiber-optic apparatus is also provided.

## Description

### RELATED APPLICATIONS

This application claims the benefit of priority of U.S. Provisional Application Serial No. 63/717,653 filed on November 7, 2024, the content of which is relied upon and incorporated herein by reference in its entirety.

### FIELD

This disclosure relates to the field of apparatuses for fiber-optic networks. In particular, the technology of the disclosure relates to a tray for use in a fiber-optic apparatus and a fiber-optic apparatus comprising a tray for a fiber-optic apparatus.

### BACKGROUND

Fiber-optic networks allow information to be transmitted via optical signals transmitted through special glass or polymer cables known as optical fibers. Compared with traditional copper wiring, optical fibers allow transmission over greater distances with substantially less signal loss, provide a greater bandwidth, and do not suffer from electrical interference. Fiber-optic networks are particularly useful when providing long-distance communication and high bandwidth, so called "super-fast," broadband internet.

Within a fiber-optic network, various fiber-optic components are used to meet the various needs of the network, such as fiber-optic splices to connect optical fibers and fiber-optic splitters to split a signal from a single optical fiber into signals in multiple optical fibers. Such fiber-optic components are typically housed in fiber-optic apparatuses and enclosures to provide access to them when needed and otherwise protect from damage and adverse conditions. A fiber-optic enclosure will often house many fiber-optic components connected to a number of different optical fibers, usually on one or more trays (sometimes termed fiber-optic trays, or splice trays, splitter trays and so on, depending upon the type of fiber-optic components thereon). Such trays typically provide space for a number of different fiber-optic components, for example twelve fiber-optic splices, and provide a convenient and efficient way to retain and provide access to a large number of optical fibers and fiber-optic connections within a compact space.

Frequently, within a single enclosure, a number of optical fibers associated with different end users or customers will all be routed and have optical components on the same splice trays. Having many different customers' optical components intermixed on a splice tray means that when one customer's network requires maintenance or other work, such as installing new optical fibers or fiber-optic components, there is a high risk of inadvertently damaging or disturbing a different customer's network components.

Embodiments of the present invention may address one or more of these problems, amongst others.

### SUMMARY

The invention is defined in the independent claims, to which the reader is now directed. Optional features are set out in the dependent claims.

According to a first aspect of the invention, a tray for use in a fiber-optic apparatus is provided. The tray has a first surface comprising a plurality of regions. Each of the plurality of regions comprises at least one fiber-optic component or mount for retaining a fiber-optic component. Each of the plurality of regions are physically separated from the others of the plurality of regions by one or more dividing barriers.

Optionally, the tray comprises a fiber entry and a fiber exit. Each of the plurality of regions comprises a first fiber routing portion for routing optical fibers from the fiber entry to the at least one fiber-optic component or mount for retaining a fiber-optic component and a second fiber routing portion for routing optical fibers from the at least one fiber-optic component or mount for retaining a fiber-optic component to the fiber exit.

Optionally, the first fiber routing portion and the second fiber routing portion of each of the plurality of regions are configured to route optical fibers around bends having a radius of curvature greater than or equal to a first threshold value. Optionally, the first fiber routing portion and the second fiber routing portion of each of the plurality of regions are configured to route optical fibers around bends having a radius of curvature less than or equal to a second threshold value.

Optionally, the tray comprises a hinge for mounting the tray in a fiber-optic apparatus. In this case, the fiber entry is coaxial with the hinge; or the fiber exit is coaxial with the hinge; or both the fiber entry and the fiber exit are coaxial with the hinge.

Optionally, each of the plurality of regions further comprises one or more fiber overlength storage portions.

Optionally, each of the plurality of regions comprises two fiber overlength storage portions disposed either side of the at least one fiber-optic component or mount for retaining a fiber-optic component.

Optionally, the at least one fiber-optic component or mount for retaining a fiber-optic component of each of the plurality of regions comprises at least one fiber-optic splice protector for retaining a fiber-optic splice.

Optionally, for each region, the at least one fiber-optic splice protector is two fiber-optic splice protectors.

Optionally, the plurality of regions comprises two regions, three regions, four regions, or five regions.

According to a second aspect of the invention, a fiber-optic apparatus is provided. The fiber-optic apparatus comprises a fiber-optic enclosure and one or more trays mounted within the fiber-optic enclosure. Each of the one or more trays has a first surface comprising a plurality of regions. Each of the one or more trays, each of the plurality of regions comprises at least one fiber-optic component or mount for retaining a fiber-optic component. For each of the one or more trays, each of the plurality of regions are physically separated from the others of the plurality of regions by one or more dividing barriers.

Optionally, each of the one or more trays comprises a fiber entry and a fiber exit. For each of the one or more trays, each of the plurality of regions comprises a first fiber routing portion for routing optical fibers from the fiber entry to the at least one fiber-optic component or mount for retaining a fiber-optic component and a second fiber routing portion for routing optical fibers from the at least one fiber-optic component or mount for retaining a fiber-optic component to the fiber exit.

Optionally, for each of the one or more trays, the first fiber routing portion and the second fiber routing portion of each of the plurality of regions are configured to route optical fibers around bends having a radius of curvature greater than or equal to a first threshold value. Optionally, for each of the one or more trays, the first fiber routing portion and the second fiber routing portion of each of the plurality of regions are configured to route optical fibers around bends having a radius of curvature less than or equal to a second threshold value.

Optionally, each of the one or more trays comprises a hinge. Each of the one or more trays is pivotably mounted in the fiber-optic enclosure about the hinge. In this case, for each of the one or more trays, the fiber entry is coaxial with the hinge; or, for each of the one or more trays, the fiber exit is coaxial with the hinge; or, for each of the one or more trays, both the fiber entry and the fiber exit are coaxial with the hinge.

Optionally, for each of the one or more trays, each of the plurality of regions further comprises one or more fiber overlength storage portions.

Optionally, for each of the one or more trays, each of the plurality of regions comprises two fiber overlength storage portions disposed either side of the at least one fiber-optic component or mount for retaining a fiber-optic component.

Optionally, for each of the one or more trays, the at least one fiber-optic component or mount for retaining a fiber-optic component of each of the plurality of regions comprises at least one fiber-optic splice protector for retaining a fiber-optic splice.

Optionally, for each region of each of the one or more trays, the at least one fiber-optic splice protector is two fiber-optic splice protectors.

Optionally, for each of the one or more trays, the plurality of regions comprises two regions, three regions, four regions, or five regions.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a perspective view of a tray according to aspects of the invention;
Figure 2 illustrates the routing of an optical fiber in the tray of Figure 1; and
Figure 3 illustrates a fiber-optic apparatus according to aspects of the invention.

Like components across different figures are represented by like reference numerals.

### DETAILED DESCRIPTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

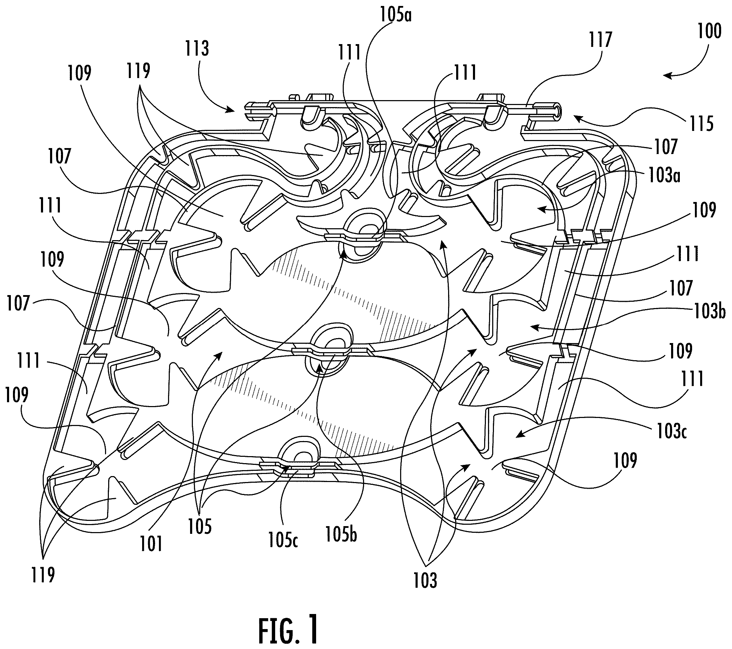

Figure 1 illustrates a tray 100 for use in a fiber-optic apparatus. Tray 100 is generally planar, and comprises a first surface 101. The first surface 101 of tray 100 comprises a plurality of regions 103. In the illustrated example, the first surface 101 of tray 100 comprises three regions 103a, 103b, 103c, though it will be appreciated that this is an illustrative example only and that the first surface 101 of tray 100 may comprise a different number of regions 103. For example, the first surface 101 of tray 100 may comprise two regions 103, three regions 103, four regions 103, five regions 103, or another number of regions 103 greater than a single region 103.

Each of the regions 103 of the first surface 101 of tray 100 comprises a fiber-optic component or mount for retaining a fiber-optic component 105. As illustrated, the fiber-optic component or mount for retaining a fiber-optic component 105 of the first region 103a is fiber-optic splice protector 105a, the fiber-optic component or mount for retaining a fiber-optic component 105 of the second region 103b is fiber-optic splice protector 105b, and the fiber-optic component or mount for retaining a fiber-optic component 105 of the third region 103c is fiber-optic splice protector 105c. In the example tray 100 of Fig. 1, each of the fiber-optic splice protectors 105a, 105b, 105c of the first region 103a, the second region 103b, and the third region 103c comprise two individual fiber-optic splice protectors. That is, each of the fiber-optic splice protectors 105a, 105b, 105c is configured to retain and protect two individual optical fiber splices. It will be understood that this is exemplary only and that fiber-optic splice protectors 105a, 105b, 105c may comprise different numbers of individual fiber-optic splice protectors (i.e., be configured to retain different numbers of optical fiber splices) such as a single individual fiber-optic splice, three fiber-optic splices, four fiber-optic splices, five fiber-optic splices, six fiber-optic splices, or another number of fiber-optic splices.

In place of fiber-optic splice protectors 105a, 105b, 105c, the fiber-optic component or mount for retaining a fiber-optic component 105 for each of the plurality of regions 103 may comprise other types of fiber-optic components or mounts for retaining other types of fiber-optic components. For example, the fiber-optic component or mount for retaining a fiber-optic component 105 may be a fiber-optic splitter or a mount for retaining a fiber-optic splitter, or a fiber-optic connector or a mount for a fiber-optic connector, amongst other components known to the person skilled in the art. In some instances, the fiber-optic component or mount for retaining a fiber-optic component 105 for each of the plurality of regions 103 may comprise two or more different fiber-optic components or mounts for retaining fiber-optic components (e.g., a fiber-optic splitter and a fiber-optic splice or mounts for retaining a fiber-optic splitter and a fiber-optic splice). In some instances, the fiber-optic component or mount for retaining a fiber-optic component 105 in different regions 103 may be different. For example, in one region 103 the fiber-optic component or mount for retaining a fiber-optic component 105 may be a fiber-optic splitter and in another region 103 the fiber-optic component or mount for retaining a fiber-optic component 105 may be a fiber-optic splice.

Each of the regions 103 of tray 100 are separated by dividing barriers 107 such that, outside of fiber entry region 113 and fiber exit region 115 of the tray 100, described in more detail below, the regions 103 are independent of one another. That is, optical fibers in one region 103 cannot be routed into another region 103, such that the optical fibers in each of the plurality of regions 103 remain separate and independent and do not mix. It can be considered that the dividing barriers 107 form the boundaries between the different regions 103 of the tray 100.

The dividing barriers 107 may take various forms and may have different forms in different parts of the same tray 100 depending upon which parts of the different regions 103 the dividing barriers 107 are separating at that location. For example, separating fiber routing regions 111 (described in more detail below) the dividing barriers 107 may take the form of walls of relatively small cross-section, whereas separating the fiber-optic components or mounts for retaining fiber-optic components 105 the dividing barriers 107 may have a much larger cross-section and be more block-like in form. Generally, the precise form of the dividing barriers 107 will be determined by spatial and layout constraints of the other features of the tray 100, such as the fiber-optic components or mounts for retaining fiber-optic components 105, cable overlength storage regions 109 (described in more detail below), and fiber routing portions 111.

As illustrated in Figure 1, each of the plurality of regions 103 of the first surface 101 of tray 100 also comprises fiber overlength storage portions 109. Fiber overlength storage portions 109 provide regions for the safe storage of excess lengths of optical fiber on tray 100. As can be seen, in the tray 100 of Figure 1, each of the plurality of regions 103 comprises a pair of fiber overlength storage portions 109. With three regions 103, this means that tray 100 has six fiber overlength storage portions 109 in total. In each region 103, the two fiber overlength storage portions 109 are positioned either side of the fiber-optic component or mount for retaining a fiber-optic component 105. That is, an optical fiber may be routed from a fiber entry region 113, through a fiber routing region 111 to a fiber overlength storage portion 109, and then connected to a fiber-optic component 105. Another optical fiber can also be attached to the fiber-optic component 105 (e.g., two optical fibers may be connected via a fiber-optic splice), pass to the fiber overlength storage region 109 on the other side of the fiber-optic component 105, through a fiber routing region 111 and to a fiber exit region 115. This provides the capacity to safely store excess lengths of optical fiber on each side of an optical component (e.g., either side of a fiber-optic splice) as the fiber-optic component or mount for retaining a fiber-optic component 105 may connect two (or more) previously separate optical fibers, each having different lengths and amounts of excess fiber after entry to tray 100 and routing through tray 100. While tray 100 is illustrated as having six fiber overlength storage regions 109, two fiber overlength storage regions 109 in each of the three regions 103, it will be appreciated that different numbers of fiber overlength storage regions 109 may be provided. For example, only a single fiber overlength storage region 109 may be provided in each region 103. In some cases, this may be shared by optical fibers either side of the fiber-optic component or mount for retaining a fiber-optic component 105. That is, two (or more) optical fibers connected to the fiber-optic component or mount for retaining a fiber-optic component 105 may both have their excess lengths stored in the same fiber overlength storage region 109. Furthermore, it will be appreciated that not all the plurality of regions 103 need necessarily comprises the same number or arrangement of fiber overlength storage regions 109, and so some regions may have differing numbers or arrangements of fiber overlength storage regions 109 to some or all the other regions 103.

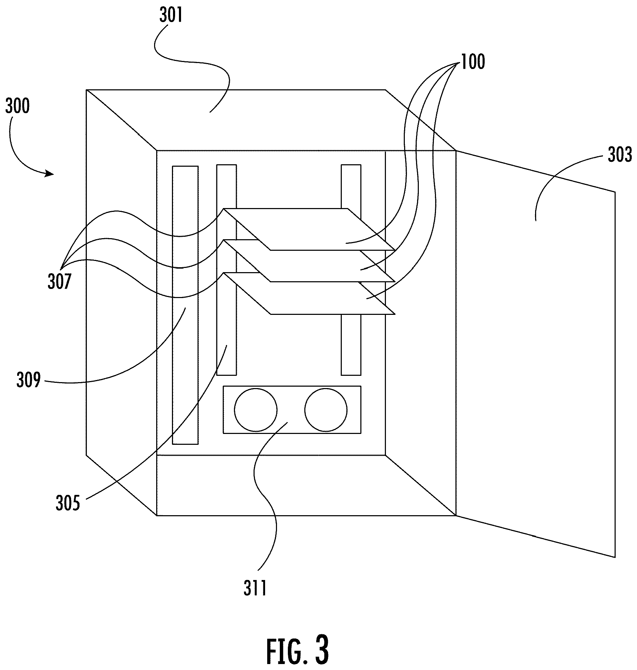

As mentioned briefly above, tray 100 also comprises a fiber entry region 113, fiber exit region 115, and fiber routing regions 111. The fiber entry region 113 provides an entrance for optical fibers to enter tray 100, while the fiber exit region 115 provides an exit for optical fibers leaving tray 100. As illustrated in Figure 1, fiber entry region 113 and fiber exit region 115 are coaxial with a hinge 117 of tray 100. The hinge 117 of tray 100 is used for rotatably or pivotably mounting tray 100 in or to a fiber-optic apparatus 300, such as to a fiber-optic rack 305 or within a fiber-optic enclosure 301 such as described with respect to Figure 3. The hinge 117 enables multiple trays 100 to be stacked together in a dense manner while enabling access to individual trays 100 as required by rotating other trays 100 about their hinges 117 to expose the first surface 101 of the tray 100 for which access is desired. Having the fiber entry region 113 and the fiber exit region 115 coaxial with the hinge 117 of tray 100 means that when tray 100 is rotated, optical fibers routed into and out of the tray via fiber entry region 113 and fiber exit region 115 respectively are subject to minimum disturbance and movement. For this reason, as illustrated, each of the plurality of regions 103 of tray 100 share a single fiber entry region 113 and fiber exit region 115, so that optical fibers for each of the regions 113 can all enter and exit tray 100 coaxially with hinge 117. However, in some other implementations, each region 103, or certain groups of regions 103, may have separate fiber entry regions 113 and fiber exit regions 115. In this case, each of the fiber entry regions 113 may be arranged close to and around the axis of rotation of hinge 117 to minimize displacement of the fiber entry regions 113 when tray 100 is rotated about hinge 100. Similarly, each of the fiber exit regions 115 may be arranged close to and around the axis of rotation of hinge 117 to minimize displacement of the fiber exit regions 115 when tray 100 is rotated about hinge 100. In this way, disturbance and movement of optical fibers routed to and from tray 100 can be reduced when tray 100 is rotated about hinge 117.

Within tray 100, optical fibers are routed between the fiber entry region 113 or the fiber exit region 115 and the other regions, features or components of tray 100 (e.g., fiber overlength regions 109 and fiber-optic components or mounts for retaining a fiber-optic components 105) via fiber routing portions 111. Fiber routing portions 111 can also route optical fibers between different regions, features or components of tray 100. Fiber routing portions 111 act as channels or guides through which optical fibers can pass, separated by dividing barriers 107, they prevent optical fibers in different regions 103 from mixing or becoming tangled. Fiber routing portions 111 are defined by portions of dividing barriers 107. That is, the fiber routing portions 111 are defined between portions of the dividing barriers 107 that form the channels or guides for routing optical fibers around the first surface 101 of tray 100 as required. The fiber routing portions 111 in each of the plurality of regions 103 may be configured to route optical fibers around bends having a radius of curvature greater than or equal to a first threshold value. Alternatively, or additionally, the fiber routing portions 103 may be configured to route optical fibers around bends having a radius of curvature less than or equal to a second threshold value. The first threshold value may be a relatively small value, such as 5mm, 7.5mm, 10mm or 15mm and the second threshold value may be a relatively large value, such as 20mm, 25mm, or 30mm. Generally, the first and second thresholds will depend upon the properties of the optical fibers with which the tray is intended to be user.

To retain optical fibers within the different portions of tray 100, in particular within the fiber overlength storage regions 109 and the fiber routing portions 111, tray 100 is provided with a number of protrusions or tabs 119. Tabs 119 extend over portions of the fiber overlength storage regions 109 and fiber routing portions 111, from dividing barriers 107 or other raised portions of the tray 100, to retain optical fibers in the respective portions of the tray 100, while still allowing them to be accessed, removed, and inserted as needed. The size and shape of the tabs 119 may vary, for example, as illustrated in Figure 1, depending upon where the tab 119 is located on tray 100 and two or more tabs 119 may cooperate to retain optical fibers in a particular portion of the tray 100. For example, as shown in Figure 1, fiber routing portions 111 may have pairs of relatively small tabs 119 disposed opposite one another (i.e., across the channel or guide of fiber routing portion 111, whereas fiber overlength storage regions 109 may have three relatively large tabs 119 extending radially inward and disposed substantially equally around the fiber overlength storage region 109. It will be appreciated, however, that these are merely exemplary arrangements of tabs 119, and that in other cases more, fewer or different tabs 119 may be used.

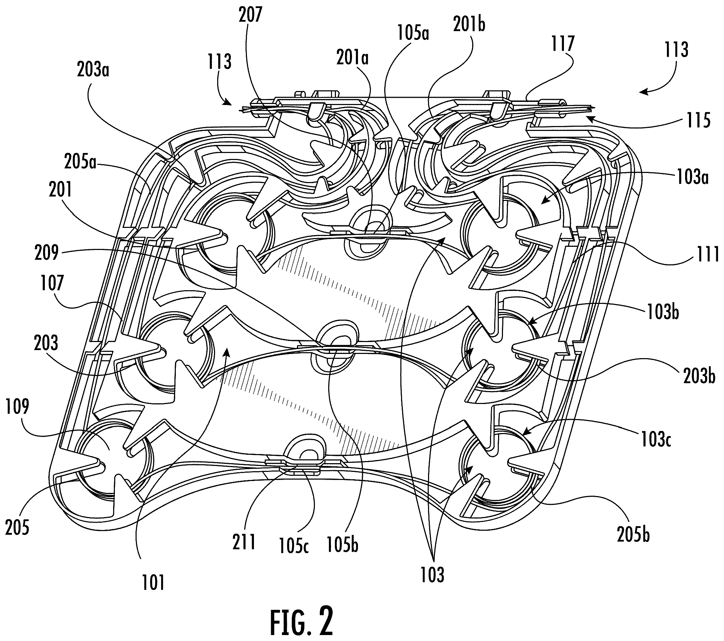

Turning to Figure 2, this Figure illustrates how optical fibers are routed through tray 100, and in particular how different optical fibers are routed through the different regions 103 of tray 100 such that they are kept separate and independent.

As illustrated, a first optical fiber 201 is routed through the first region 103a, a second optical fiber 203 is routed through the second region 103b, and a third optical fiber 205 is routed through the third region 203c. Each of the optical fibers 201, 203, 205 comprises two fiber portions 201a, 201b, 203a, 203b, 205a, 205b joined together by a splice 207, 209, 211. That is, the first optical fiber 201 is formed of a first portion 201a and a second portion 201b that are spliced together at splice 207, the second optical fiber 203 is formed of a first portion 203a and a second portion 203b that are spliced together at splice 209, and the third optical fiber 205 is formed of a first portion 205a and a second portion 205b that are spliced together at splice 211.

The first portion 201a of the first optical fiber 201 enters tray 100 via fiber entry region 113 and is then routed through fiber routing portion 111 to the fiber overlength storage region 109 of the first region 103a of the tray 100. Here, the first portion 201a of the first optical fiber 201 may be coiled to store excess fiber length, before it is spliced at splice 207 to the second portion 201b of the first optical fiber 201. Splice 207 is retained by fiber-optic splice protector 105a of the first region 103a. The second portion 201b of the first optical fiber 201 leaves splice 207 and again has coils of excess fiber length stored in a fiber overlength storage region 109 of the first region 103a, before passing through fiber routing portion 111 to the fiber exit region 115. Here, the second portion 201b of the first optical fiber 201 exits tray 100 for further routing in a fiber-optic network.

The first portion 203a of the second optical fiber 203 enters tray 100 via fiber entry region 113 and is then routed through fiber routing portion 111 to the fiber overlength storage region 109 of the second region 103b of the tray 100. Here, the first portion 203a of the second optical fiber 203 may be coiled to store excess fiber length, before it is spliced at splice 209 to the second portion 203b of the second optical fiber 203. Splice 209 is retained by fiber-optic splice protector 105b of the second region 103b. The second portion 203b of the second optical fiber 203 leaves splice 209 and again has coils of excess fiber length stored in a fiber overlength storage region 109 of the second region 103b, before passing through fiber routing portion 111 to the fiber exit region 115. Here, the second portion 203b of the second optical fiber 203 exits tray 100 for further routing in a fiber-optic network.

The first portion 205a of the third optical fiber 205 enters tray 100 via fiber entry region 113 and is then routed through fiber routing portion 111 to the fiber overlength storage region 109 of the third region 105b of the tray 100. Here, the first portion 205a of the third optical fiber 205 may be coiled to store excess fiber length, before it is spliced at splice 211 to the second portion 205b of the third optical fiber 205. Splice 211 is retained by fiber-optic splice protector 105c of the third region 103c. The second portion 205b of the third optical fiber 205 leaves splice 211 and again has coils of excess fiber length stored in a fiber overlength storage region 109 of the third region 103c, before passing through fiber routing portion 111 to the fiber exit region 115. Here, the second portion 205b of the third optical fiber 205 exits tray 100 for further routing in a fiber-optic network.

As can be seen in Figure 2, the only time that the first optical fiber 201, the second optical fiber 203, and the third optical fiber 205 are not independently routed and intermingle is at fiber entry region 113 and fiber exit region 115, where the fiber all enter and exit through the same openings coaxial with hinge 117. Subsequently, once the first optical fiber 201, the second optical fiber 203 and the third optical fiber 205 have entered the first region 103a, the second region 103b, and the third region 103c respectively of tray 100 (i.e., they are routed into their respective regions 103a, 103b, 103c by fiber routing portions 111 from fiber entry region 113 and fiber exit region 115), the first optical fiber 201, the second optical fiber 203, and the third optical fiber 205 are effectively isolated from one another by dividing barriers 107. This enables manipulation of one of the optical fibers 201, 203, 205 in one region 103 without risk of disturbing the other optical fibers 201, 203, 205 in the other regions 103. For example, new splices 207, 209, 211 can be made in one region 103 without risk of disturbing or damaging optical fibers 201, 203, 205 or existing splices 207, 209, 211 in the other regions 103.

Trays 100 may be mounted within a fiber-optic apparatus, such as fiber-optic apparatus 300 illustrated in Figure 3. Fiber-optic apparatus 300 provides a may of mounting, accessing and protecting a number of trays 100 to enable the efficient implementation of large fiber-optic networks comprising many fiber-optic cables and optical fibers and many fiber-optic components.

Fiber-optic apparatus 300 comprises an enclosure 301, within which trays 100 are housed, and a door 303 to provide access to trays 100 within the enclosure 301. Depending upon the environment in which fiber-optic apparatus 300 is to be installed, the enclosure 301 and door 303 may vary from those illustrated in Figure 3. For example, if for installation in an outdoor environment, enclosure 301 and door 303 will typically comprise some form of sealing, such as a gasket around the join between the enclosure 301 and the door 303 to prevent ingress of water, dust or other environmental effects. On the other hand, such sealing may not be required if fiber-optic apparatus 300 is for installation in an indoor environment, or less substantial sealing may be required (e.g., sealing to prevent dust ingress but not water). In some cases, particularly if for installation in a highly controlled environment such as a data center, door 303 may be omitted entirely sacrificing some protection for increased accessibility of trays 100 within enclosure 301. Where a door 303 is provided, a latch or locking mechanism may also be provided to restrict access to the trays 100 within the fiber-optic apparatus 300.

Within fiber-optic apparatus 300, one or more trays 100 are mounted. Trays 100 may, for example, be substantially the same as or similar to trays 100 described with respect to Figures 1 and 3. The number of trays 100 that may be mounted within a fiber-optic apparatus 300 is not restricted herein, and may be a relatively small number, such as 6 or 12, or a much greater number, such as 100, depending upon the intended use of fiber-optic apparatus 300. Furthermore, trays 100 are removable from fiber-optic apparatus 300, and so while a fiber-optic apparatus 300 may be configured to have a certain number of trays 100 mounted within, fewer trays 100 may in reality be mounted within fiber-optic apparatus 300.

To mount trays 100 within fiber-optic apparatus 300, a rack 305 is provided. Rack 305 comprises a plurality of hinges 307 which cooperate and engage with hinges 117 of the trays 100 to pivotable mount the trays 100 to the rack 305 within fiber-optic apparatus 300. The hinges 117, 307 enable the trays 100 to be pivoted within fiber-optic enclosure 300 to provide access to a desired tray 100, enabling trays 100 to be installed more densely (i.e., closer together) without inhibiting access to a given tray 100 when required. In other examples, it will be appreciated that rack 305 need not be provided and that enclosure 301 may be directly provided with hinges 307 for mounting trays 100 directly to the enclosure 301 of fiber-optic apparatus 300.

Fiber-optic apparatus 100 is also provided with fiber routing regions 309 within enclosure 301, as well as fiber overlength storage regions 311. Fiber routing regions 309 enable optical fibers and fiber-optic cables to be routed safely and securely within fiber-optic apparatus 300, while fiber overlength storage regions 311 enable the safe and secure storage of excess lengths of optical fiber or fiber-optic cables.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Aspects of the invention are set out in the following numbered clauses:
Clause 1. A tray for use in a fiber-optic apparatus, the tray having a first surface comprising a plurality of regions;
   wherein each of the plurality of regions comprises at least one fiber-optic component or mount for retaining a fiber-optic component; and
   wherein each of the plurality of regions are physically separated from the others of the plurality of regions by one or more dividing barriers.
Clause 2. The tray of clause 1, comprising a fiber entry and a fiber exit;
   wherein each of the plurality of regions comprises a first fiber routing portion for routing optical fibers from the fiber entry to the at least one fiber-optic component or mount for retaining a fiber-optic component and a second fiber routing portion for routing optical fibers from the at least one fiber-optic component or mount for retaining a fiber-optic component to the fiber exit.
Clause 3. The tray of clause 2, wherein the first fiber routing portion and the second fiber routing portion of each of the plurality of regions are configured to route optical fibers around bends having a radius of curvature greater than or equal to a first threshold value and/or wherein the first fiber routing portion and the second fiber routing portion of each of the plurality of regions are configured to route optical fibers around bends having a radius of curvature less than or equal to a second threshold value.
Clause 4. The tray of clause 2 or 3, wherein the tray comprises a hinge for mounting the tray in a fiber-optic apparatus;
   wherein the fiber entry is coaxial with the hinge; or wherein the fiber exit is coaxial with the hinge; or wherein both the fiber entry and the fiber exit are coaxial with the hinge.
Clause 5. The tray of any preceding clause, wherein each of the plurality of regions further comprises one or more fiber overlength storage portions.
Clause 6. The tray of clause 5, wherein each of the plurality of regions comprises two fiber overlength storage portions disposed either side of the at least one fiber-optic component or mount for retaining a fiber-optic component.
Clause 7. The tray of any preceding clause, wherein the at least one fiber-optic component or mount for retaining a fiber-optic component of each of the plurality of regions comprises at least one fiber-optic splice protector for retaining a fiber-optic splice.
Clause 8. The tray of clause 7, wherein, for each region, the at least one fiber-optic splice protector is two fiber-optic splice protectors.
Clause 9. The tray of any preceding clause, wherein the plurality of regions comprises two regions, three regions, four regions, or five regions.
Clause 10. A fiber-optic apparatus comprising a fiber-optic enclosure and one or more trays mounted within the fiber-optic enclosure;
   wherein each of the one or more trays has a first surface comprising a plurality of regions;
   wherein, for each of the one or more trays, each of the plurality of regions comprises at least one fiber-optic component or mount for retaining a fiber-optic component; and
   wherein, for each of the one or more trays, each of the plurality of regions are physically separated from the others of the plurality of regions by one or more dividing barriers.
Clause 11. The fiber-optic apparatus of clause 10, wherein each of the one or more trays comprises a fiber entry and a fiber exit;
   wherein, for each of the one or more trays, each of the plurality of regions comprises a first fiber routing portion for routing optical fibers from the fiber entry to the at least one fiber-optic component or mount for retaining a fiber-optic component and a second fiber routing portion for routing optical fibers from the at least one fiber-optic component or mount for retaining a fiber-optic component to the fiber exit.
Clause 12. The fiber-optic apparatus of clause 11, wherein, for each of the one or more trays, the first fiber routing portion and the second fiber routing portion of each of the plurality of regions are configured to route optical fibers around bends having a radius of curvature greater than or equal to a first threshold value and/or wherein, for each of the one or more trays, the first fiber routing portion and the second fiber routing portion of each of the plurality of regions are configured to route optical fibers around bends having a radius of curvature less than or equal to a second threshold value.
Clause 13. The fiber-optic apparatus of clause 11 or 12, wherein each of the one or more trays comprises a hinge, wherein each of the one or more trays is pivotably mounted in the fiber-optic enclosure about the hinge; and
   wherein, for each of the one or more trays, the fiber entry is coaxial with the hinge; or wherein, for each of the one or more trays, the fiber exit is coaxial with the hinge; or wherein, for each of the one or more trays, both the fiber entry and the fiber exit are coaxial with the hinge.
Clause 14. The fiber-optic apparatus of any of clauses 10 to 13, wherein, for each of the one or more trays, each of the plurality of regions further comprises one or more fiber overlength storage portions.
Clause 15. The fiber-optic apparatus of clause 14, wherein, for each of the one or more trays, each of the plurality of regions comprises two fiber overlength storage portions disposed either side of the at least one fiber-optic component or mount for retaining a fiber-optic component.
Clause 16. The fiber-optic apparatus of any of clauses 10 to 15, wherein, for each of the one or more trays, the at least one fiber-optic component or mount for retaining a fiber-optic component of each of the plurality of regions comprises at least one fiber-optic splice protector for retaining a fiber-optic splice.
Clause 17. The fiber-optic apparatus of clause 16, wherein, for each region of each of the one or more trays, the at least one fiber-optic splice protector is two fiber-optic splice protectors.
Clause 18. The fiber-optic apparatus of any of clauses 10 to 17, wherein for each of the one or more trays, the plurality of regions comprises two regions, three regions, four regions, or five regions.

## Claims

1. A tray for use in a fiber-optic apparatus, the tray having a first surface comprising a plurality of regions;
wherein each of the plurality of regions comprises at least one fiber-optic component or mount for retaining a fiber-optic component; and
wherein each of the plurality of regions are physically separated from the others of the plurality of regions by one or more dividing barriers.

2. The tray of claim 1, comprising a fiber entry and a fiber exit;
wherein each of the plurality of regions comprises a first fiber routing portion for routing optical fibers from the fiber entry to the at least one fiber-optic component or mount for retaining a fiber-optic component and a second fiber routing portion for routing optical fibers from the at least one fiber-optic component or mount for retaining a fiber-optic component to the fiber exit.

3. The tray of claim 2, wherein the first fiber routing portion and the second fiber routing portion of each of the plurality of regions are configured to route optical fibers around bends having a radius of curvature greater than or equal to a first threshold value and/or wherein the first fiber routing portion and the second fiber routing portion of each of the plurality of regions are configured to route optical fibers around bends having a radius of curvature less than or equal to a second threshold value.

4. The tray of any one of claims 2-3, wherein the tray comprises a hinge for mounting the tray in a fiber-optic apparatus;
wherein the fiber entry is coaxial with the hinge; or wherein the fiber exit is coaxial with the hinge; or wherein both the fiber entry and the fiber exit are coaxial with the hinge.

5. The tray of any one of claims 1-4, wherein each of the plurality of regions further comprises one or more fiber overlength storage portions.

6. The tray of claim 5, wherein each of the plurality of regions comprises two fiber overlength storage portions disposed either side of the at least one fiber-optic component or mount for retaining a fiber-optic component.

7. The tray of any one of claim 1-6, wherein the at least one fiber-optic component or mount for retaining a fiber-optic component of each of the plurality of regions comprises at least one fiber-optic splice protector for retaining a fiber-optic splice.

8. The tray of claim 7, wherein, for each region, the at least one fiber-optic splice protector is two fiber-optic splice protectors.

9. The tray of any one of claims 1-8, wherein the plurality of regions comprises two regions, three regions, four regions, or five regions.
